# FASCICULE DE BREVET EUROPEEN

(11) **EP 3 328 957 B1**
(45) Date de publication et mention de la délivrance du brevet: **22.05.2019**
(21) Numéro de dépôt: 16744808.3
(22) Date de dépôt: 08.07.2016
(51) Int. Cl.: C09J 153/00, C09J 133/12

(54) **COMPOSITION D'ADDITIF UTILISABLE DANS UN ADHESIF STRUCTURAL**
ZUR VERWENDUNG IN EINEM STRUKTURKLEBSTOFF NÜTZLICHE ADDITIVZUSAMMENSETZUNG
ADDITIVE COMPOSITION SUITABLE FOR USE IN A STRUCTURAL ADHESIVE

(30) Priorité: 28.07.2015 FR 1557197
(43) Date de publication de la demande: 06.06.2018
(73) Titulaire: ARKEMA FRANCE, 92705 Colombes Cedex (FR)
(72) Inventeur: BRET, Christian, 33200 Bordeaux (FR); FRADIN, Olivier, 33600 Pessac (FR); ROUX, Mathieu, 33720 Cerons (FR); VAIQUE, Emilie, 33240 Peujard (FR); VALLOIR, Nicolas, 33170 Gradignan (FR); INOUBLI, Raber, 69100 Villeurbanne (FR)
(86) Numéro de dépôt international: PCT/FR2016/051748
(87) Numéro de publication internationale: WO 2017/017329

(56) Documents cités:
- WO-A1-2012/131185
- WO-A1-2013/126377
- FR-A1- 2 914 651
- US-A- 5 262 479

## Description

La présente invention concerne une composition d'additif utilisable dans un adhésif structural.

Les adhésifs dits structuraux sont composés de deux constituants, conservés séparément, en général dans des tubes. Le premier des constituants contient le monomère ou le mélange de monomères apte à former par polymérisation un corps solide, tandis que le deuxième constituant contient le catalyseur qui va provoquer la polymérisation. En mélangeant les deux constituants, on provoque la polymérisation.

On utilise généralement des mélanges de monomères de type méthacrylate.

Le document FR2914651 décrit une composition utilisable dans un adhésif structural caractérisée en ce qu'elle comprend un copolymère bloc contenant du styrène et des particules polymériques élastomériques. Ces particules sont formées d'une coquille thermoplastique dure, préférentiellement à base de polyméthacrylate de méthyle et d'un coeur élastomérique généralement à base de butadiène.

Le document WO 2012/131185 décrit une composition pouvant être utilisée dans des adhésifs structuraux, notamment des adhésifs structuraux de type méthacrylate.

Ce document décrit un système polymérique comprenant des copolymères à blocs sans styrène, formés d'au moins deux blocs et avantageusement d'au moins trois blocs. Ce système est solubilisé dans une matrice de méthacrylate qui peut comprendre des éléments contenant du styrène tels que du caoutchouc de styrène butadiène, un copolymère styrène-butadiène-styrène et/ou styrène-butadiène-méthacrylate de méthyle. Les polymères à blocs qui peuvent être utilisés sont, par exemple, des copolymères à blocs PMMA-PBU-PMMA ou des copolymères à blocs PMMA-PABU-PMMA (PMMA signifiant poly méthacrylate de méthyle, PBU signifiant polybutadiène et PABU signifiant polyacrylate de butyle).

Le document précité indique que le choix de copolymères à blocs sans styrène permet d'obtenir un allongement à la rupture mesuré selon la norme ISO 527-1A qui est trois fois plus élevé que celui obtenu avec la même composition mais ne contenant pas les copolymères à blocs précités. Après polymérisation de l'adhésif, celui-ci résiste de plus à des températures de plus de 200°C ce qui permet de peindre l'assemblage obtenu par collage avec l'adhésif.

La Demanderesse a remarqué que, de manière surprenante, il était notamment possible d'augmenter encore cet allongement à la rupture et/ou d'améliorer d'autres propriétés des assemblages de pièces collées.

Ainsi, la présente invention propose une composition d'additif utilisable notamment dans un adhésif structural, qui de manière caractéristique, selon l'invention, comprend :
- au moins un copolymère à blocs sans styrène formé d'au moins deux blocs et en particulier d'au moins trois blocs ;
- et une pluralité de particules du type noyau-enveloppe comprenant un matériau élastomère.

La Demanderesse a en effet constaté que l'ajout de particules solides du type noyau-enveloppe (« core-shell » en Anglais) telles que précité, permettait d'augmenter encore l'allongement à la rupture. La Demanderesse a ainsi mis en évidence l'existence d'une synergie entre les copolymères à blocs précités et les particules solides du type noyau-enveloppe précitées.

Elle a de plus constaté que, de manière inattendue et surprenante, l'ajout de particules solides telles que précité pouvait permettre également d'augmenter l'indice de thixotropie de la composition. Cette propriété est très appréciée pour la fabrication d'un adhésif structural. Les particules précitées permettent de diminuer la quantité d'additif(s) rhéologique(s) tels que les silices pyrogénées, les cires de polymères et les argiles de type bentonite qui sont habituellement utilisées, voire de remplacer ces additifs. Ces additifs rhéologiques sont en effet susceptibles de diminuer l'adhésion procurée par l'adhésif structural et leur utilisation est donc à limiter.

Par ailleurs, la Demanderesse a également constaté que l'ajout de particules telles que précité pouvait augmenter l'impact à froid et/ou l'impact à chaud.

De préférence, les particules solides de type noyau-enveloppe ne se dissolvent pas dans le ou les copolymères à blocs précités ni dans un monomère de type acrylique ou méthacrylique, en particulier dans le méthacrylate de méthyle. Selon un premier mode de réalisation, le copolymère à blocs comporte au moins un bloc A choisi parmi :
- le PMMA ;
- le PMMA dont au moins une partie des groupements CH₃ et/ou OCH₃ du bloc PMMA sont substitués par un atome ou un groupement fonctionnel choisi parmi un atome H, un groupe carboxyle, NH₂, 1,2 époxy propyl (CH₂COCH₂) ;
- les copolymères de PMMA obtenus par copolymérisation de méthacrylate de méthyle avec au moins un monomère choisi parmi l'acide acrylique, les dérivés alkylés de l'acide acrylique, notamment, l'acide méthacrylique, l'éthyle acrylate, le butyle acrylate, le 2-éthyl acrylate d'héxyle, l'hydroxy éthyle acrylate, le 2-éthyle méthacrylate d'héxyle, les amides de l'acide acrylique, les amides de l'acide méthacrylique, notamment la di méthyl acrylamide, le 2-méthoxy acrylate d'éthyl, le 2-métoxy méthacrylate d'éthyl, les acrylates de 2-amino éthyl, les méthacrylates de 2-amino éthyl, les amines quaternaires du 2-méthoxy acrylate d'éthyl, du 2-métoxy méthacrylate d'éthyl, des acrylates de 2-amino éthyl et des méthacrylates de 2-amino éthyl, les acrylates de polyéthylène glycol, les méthacrylates de polyéthylène glycol, les monomères solubles dans l'eau, les monomères comprenant un groupement vinyl et solubles dans l'eau, notamment la N-vinyl pyrrolidone.

La Demanderesse a mis en évidence que la présence d'un bloc de PMMA, éventuellement fonctionnalisé comme précité, ou d'un copolymère de PMMA de préférence comportant au moins 50% de PMMA permettait d'améliorer au moins un des paramètres choisi parmi l'allongement à la rupture, l'indice de thixotropie, l'impact à froid et l'impact post cuisson.

Le ou les autres blocs du copolymère à blocs ne sont pas limités selon l'invention.

Selon un autre mode de réalisation qui peut être combiné avec le précédent, ledit copolymère à blocs comporte au moins un bloc B d'un polymère qui présente une température de transition vitreuse Tg sensiblement égale ou inférieure à 0°C et notamment sensiblement égale ou inférieure à -40°C.

Ainsi, à titre d'exemples, non limitatifs, le bloc B peut être choisi parmi :
- le PBA (poly acrylate de butyle);
- le PBA dont au moins une partie des groupements CH₃ et/ou OCH₃ du bloc PBA sont substitués par un atome ou un groupement fonctionnel choisi parmi un atome H, un groupe carboxyle, NH₂, 1,2 époxy propyl (CH₂COCH₂) ;
- les copolymères de PBA obtenu par copolymérisation d'acrylate de butyle avec au moins un monomère choisi parmi l'acide acrylique, les dérivés alkylés de l'acide acrylique, notamment, l'acide méthacrylique, l'éthyle acrylate, le butyle acrylate, le 2-éthyl acrylate d'héxyle, l'hydroxy éthyle acrylate, le 2-éthyle méthacrylate d'héxyle, les amides de l'acide acrylique, les amides de l'acide méthacrylique, notamment la di méthyl acrylamide, le 2-méthoxy acrylate d'éthyl, le 2-métoxy méthacrylate d'éthyl, les acrylates de 2-amino éthyl, les méthacrylates de 2-amino éthyl, les amines quaternaires du 2-méthoxy acrylate d'éthyl, du 2-métoxy méthacrylate d'éthyl, des acrylates de 2-amino éthyl et des méthacrylates de 2-amino éthyl, les acrylates de polyéthylène glycol, les méthacrylates de polyéthylène glycol, les monomères solubles dans l'eau, les monomères comprenant un groupement vinyl et solubles dans l'eau, notamment la N-vinyl pyrrolidone.

Le copolymère à blocs peut comporter un bloc A tel que défini en référence au premier mode de réalisation et un bloc B tel que défini dans les exemples précités.

Selon un mode de réalisation particulier, ledit copolymère à blocs comprend au moins un bloc A et un bloc B, en ce que ledit bloc A est choisi parmi
- le PMMA ;
- le PMMA dont au moins une partie des groupements CH₃ et/ou OCH₃ du bloc PMMA sont substitués par un atome ou un groupement fonctionnel choisi parmi un atome H, un groupe carboxyle, NH₂, 1,2 époxy propyl (CH₂COCH₂) ;
- les copolymères de PMMA obtenus par copolymérisation de méthacrylate de méthyle avec au moins un monomère choisi parmi l'acide acrylique, les dérivés alkylés de l'acide acrylique, notamment, l'acide méthacrylique, l'éthyle acrylate, le butyle acrylate, le 2-éthyl acrylate d'héxyle, l'hydroxy éthyle acrylate, le 2-éthyle méthacrylate d'héxyle, les amides de l'acide acrylique, les amides de l'acide méthacrylique, notamment la di méthyl acrylamide, le 2-méthoxy acrylate d'éthyl, le 2-métoxy méthacrylate d'éthyl, les acrylates de 2-amino éthyl, les méthacrylates de 2-amino éthyl, les amines quaternaires du 2-méthoxy acrylate d'éthyl, du 2-métoxy méthacrylate d'éthyl, des acrylates de 2-amino éthyl et des méthacrylates de 2-amino éthyl, les acrylates de polyéthylène glycol, les méthacrylates de polyéthylène glycol, les monomères solubles dans l'eau, les monomères comprenant un groupement vinyl et solubles dans l'eau, notamment la N-vinyl pyrrolidone. ;
et ledit bloc B est choisi parmi :
- le PBA ;
- le PBA dont au moins une partie des groupements CH₃ et/ou OCH₃ du bloc PBA sont substitués par un atome ou un groupement fonctionnel choisi parmi un atome H, un groupe carboxyle, NH₂, 1,2 époxy propyl (CH₂COCH₂) ;
- les copolymères de PBA obtenus par copolymérisation d'acrylate de butyle avec au moins un monomère choisi parmi l'acide acrylique, les dérivés alkylés de l'acide acrylique, notamment, l'acide méthacrylique, l'éthyle acrylate, le butyle acrylate, le 2-éthyl acrylate d'héxyle, l'hydroxy éthyle acrylate, le 2-éthyle méthacrylate d'héxyle, les amides de l'acide acrylique, les amides de l'acide méthacrylique, notamment la di méthyl acrylamide, le 2-méthoxy acrylate d'éthyl, le 2-métoxy méthacrylate d'éthyl, les acrylates de 2-amino éthyl, les méthacrylates de 2-amino éthyl, les amines quaternaires du 2-méthoxy acrylate d'éthyl, du 2-métoxy méthacrylate d'éthyl, des acrylates de 2-amino éthyl, des méthacrylates de 2-amino éthyl, les acrylates de polyéthylène glycol, les méthacrylates de polyéthylène glycol, les monomères solubles dans l'eau, les monomères comprenant un groupement vinyl et solubles dans l'eau, notamment la N-vinyl pyrrolidone.

Le copolymère à blocs peut être un copolymère poly méthacrylate de méthyle bloc- poly acrylate de butyle bloc- poly méthacrylate de méthyle.

La pluralité de particules peut comprendre des particules qui comportent un premier polymère de type élastomère dont la température de transition vitreuse est sensiblement égale ou inférieure à 0°C et notamment sensiblement égale ou inférieure à -40°C. Ce premier polymère peut être notamment contenu dans le noyau ou coeur. Il peut être contenu également dans l'enveloppe ou dans le noyau et l'enveloppe de la particule.

De telles particules permettent d'augmenter l'allongement à la rupture, l'impact à froid et/ou l'impact post cuisson.

Ce premier polymère peut être choisi parmi les polymères acryliques, le polybutadiène, notamment réticulé, les copolymères de styrène et butadiène, le polyacrylate de butyle, les polysiloxanes, en particulier le poly (diméthylsiloxane) et les mélanges d'au moins deux de ces polymères/copolymères.

Selon un mode de réalisation particulier, ledit premier polymère est notamment contenu dans ledit coeur et ladite enveloppe desdites particules comprend un deuxième polymère dont la température de transition vitreuse est sensiblement égale ou supérieure à 30°C. Ce deuxième polymère peut également être présent dans le coeur. Le premier polymère peut également être présent dans ladite enveloppe.

Selon un mode de réalisation particulier qui peut être combiné à l'un quelconque des modes de réalisation précités, ledit deuxième polymère présente une température de transition vitreuse Tg sensiblement supérieure à 30°C et sensiblement égale ou inférieure à 150°C, en particulier, sensiblement supérieure à 60°C et plus particulièrement sensiblement supérieure à 80°C, avantageusement sensiblement supérieure à 90°C et plus avantageusement sensiblement supérieure à 100°C.

Selon un mode de réalisation particulier du deuxième polymère, celui-ci comporte des doubles liaisons et/ou des motifs vinyle. Ce mode de réalisation particulier du deuxième polymère peut être combiné avec tout mode de réalisation du premier polymère.

Ainsi, le deuxième polymère peut être choisi parmi les copolymères acryliques et les copolymères méthacryliques et notamment parmi les copolymères acryliques contenant au moins 70% en poids de monomères choisis parmi les acrylates de C1-C12-alkyle, les copolymères méthacryliques contenant au moins 70% en poids de monomères choisis parmi les méthacrylates de C1-C12-alkyle, en particulier parmi les copolymères acryliques ou méthacrylique comprenant, respectivement, au moins 80% en poids de monomères de type acrylate de C1-C4-alkyle ou 80% en poids de monomères de type méthacrylate de C1-C8-alkyle. Le premier polymère peut être notamment du polybutadiène, éventuellement réticulé.

A titre d'exemples, lesdits monomères acryliques sont choisis parmi l'acrylate de méthyle, l'acrylate d'éthyle, l'acrylate de butyle et les mélanges d'au moins deux desdits monomères, et lesdits monomères méthacryliques sont choisis parmi le méthacrylate de méthyle, le méthacrylate d'éthyle, le méthacrylate de butyle et les mélanges d'au moins deux desdits monomères. Le premier polymère peut être dans ce cas, notamment du polybutadiène éventuellement réticulé.

Avantageusement, le deuxième polymère comprend au moins 50% en poids d'unités monomères provenant du méthacrylate de méthyle. Dans ce cas, ledit premier polymère peut être choisi parmi les polymères acryliques, le polybutadiène, notamment réticulé, les copolymères de styrène et butadiène, le polyacrylate de butyle, les polysiloxanes, en particulier le poly (diméthylsiloxane) et les mélanges d'au moins deux de ces polymères/copolymères. Le premier polymère peut être plus particulièrement du polybutadiène éventuellement réticulé.

Selon un mode de réalisation particulier, les particules solides comportent un noyau contenant du polybutadiène et une enveloppe contenant du PMMA.

La composition selon l'invention peut également comprendre au moins un monomère de type acrylique et/ou au moins un monomère de type méthacrylique.

Selon un mode de réalisation particulier, la composition comprend un copolymère à blocs PMMA bloc-PABU bloc -PMMA et des particules de type noyau enveloppe dont le noyau contient un premier polymère de type élastomère dont la température de transition vitreuse est sensiblement égale ou inférieure à 0°C et notamment sensiblement égale ou inférieure à -40°C et une enveloppe contenant un deuxième polymère dont la température de transition vitreuse est sensiblement égale ou supérieure à 30°C, en particulier sensiblement supérieure à 30°C et sensiblement égale ou inférieure à 150°C, en particulier, sensiblement supérieure à 60°C et plus particulièrement sensiblement supérieure à 80°C, avantageusement sensiblement supérieure à 90°C et plus avantageusement sensiblement supérieure à 100°C ; le premier polymère pouvant aussi être contenu dans ladite enveloppe et ledit deuxième polymère pouvant également être contenu dans ledit noyau.

La présente invention concerne également un kit d'adhésif structural comprenant une première composition contenant :
- au moins un monomère de type acrylique ou méthacrylique ;
- une composition d'additif selon l'invention ;
- éventuellement des additifs rhéologiques physiques et/ou chimiques
- éventuellement au moins un additif d'adhérence ; et
- au moins une amine choisie parmi les amines aliphatiques, hétérocycliques et aromatiques et notamment parmi les amines secondaires et tertiaires.

A titre d'exemple d'additifs rhéologique, on peut citer la silice pyrogénée, le carbonate de calcium, le talc, les argiles, notamment la bentonite et la cire polyamide.

A titre d'exemple d'additif d'adhérence on peut citer : les composés du type silyle, les composés phosphatés et les acides sulfoniques.

Le kit peut également comprendre une deuxième composition apte à polymériser ledit monomère lorsqu'elle est mélangée à ladite première composition, ladite deuxième composition comprend des composés radicalaires notamment des peroxydes et/ou des composés du type azonitrile.

Selon un mode particulier de réalisation, la première composition contient :
- une quantité dudit monomère sensiblement égale ou supérieure à 5% en masse et sensiblement égale ou inférieure à 60% en masse de ladite première composition, notamment une quantité de méthacrylate sensiblement égale ou supérieure à 15% en masse et sensiblement égale ou inférieure à 60% en masse de ladite première composition ;
- une quantité dudit additif selon l'invention sensiblement égale ou supérieure à 5% en masse et sensiblement égale ou inférieure à 87,5 % en masse de ladite première composition ;
- une quantité d'additif(s) rhéologique(s) sensiblement égale ou supérieure à 0% en masse et sensiblement égale ou inférieure à 5 % en masse de ladite première composition ;
- une quantité d'additif(s) d'adhérence sensiblement égale ou supérieure à 1% en masse et sensiblement égale ou inférieure à 10 % en masse de ladite première composition, notamment sensiblement égale à 5% ;
- une quantité d'amine(s) sensiblement égale ou supérieure à 0,5% en masse et sensiblement égale ou inférieure à 5 % en masse de ladite première composition.

La composition d'additif selon l'invention peut servir pour la fabrication d'un additif structural qui peut être utilisé pour le calfatage, le collage de pièces métalliques, de pièces en verre, polystyrène, ABS, polyester, polycarbonate, aluminium, acier, acier inoxydable, acier galvanisé et/ou PMMA, notamment.

### Définitions

Le terme « polymère » englobe les homopolymères et les copolymères.

Le terme « copolymère » englobe les copolymères à blocs et les copolymères statistiques.

Le terme « polymère de type élastomère » désigne tout polymère ou mélange de polymères dont la température de transition vitreuse est inférieure à 20°C.

L'acronyme « PMMA » désigne le poly méthacrylate de méthyle.

L'acronyme « PBA » désigne le polyacrylate de butyle.

Les termes « température de transition vitreuse » (Tg) désignent la valeur obtenue par ATD (analyse Thermique Différentielle).

L'indice de thixotropie est défini comme étant le rapport entre la viscosité mesurée à une vitesse v1 (exprimée en tours par minutes) et la viscosité mesurée à une vitesse égale à 10 fois v1. En particulier, le terme indice de thixotropie peut être égal au rapport suivant : viscosité mesurée à 2 tr/min / viscosité mesurée à 20 tr/min. Plus l'indice de thixotropie est élevé, plus la composition étudiée devient fluide sous agitation ou du fait de l'augmentation d'une contrainte de cisaillement qui lui est appliquée.

Le terme « motif vinyle » désigne le motif suivant : CH₂=CH-.

Le terme « polymère acrylique » désigne tout polymère comprenant le motif suivant :

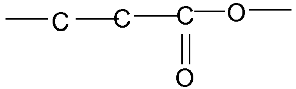

Le terme « polymère méthacrylique » désigne tout polymère comprenant le motif suivant :

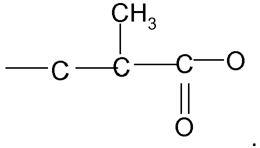

L'impact à froid est mesuré de la manière suivante : deux pièces en alliage d'aluminium de type 6060 et/ou 6061 sont assemblées par recouvrement sur une surface de 650mm² au moyen d'une couche d'adhésif à tester présentant une épaisseur calibrée à 500µm. Dix-huit heures après avoir réalisé l'assemblage précité, celui-ci est placé durant 2 heures à température de -10°C.Juste après sa sortie du dispositif maintenant l'assemblage à la température précitée, l'assemblage est disposé sur un étau. On percute alors l'assemblage avec une masse de 1.5kg lâchée d'une hauteur de 1 mètre. Le nombre de lâchés jusqu'à la rupture de l'assemblage est défini comme étant l'impact à froid.

L'impact post cuisson est mesuré de la manière suivante : deux pièces en alliage d'aluminium de type 6060 et/ou 6061 sont assemblées par recouvrement sur une surface de 650mm² au moyen d'une couche de l'adhésif à tester présentant une épaisseur calibrée à 500µm. Dix-huit heures après avoir réalisé l'assemblage précité, celui-ci est placé durant 30 minutes à température de + 200°C. Douze heures après sa sortie du dispositif maintenant l'assemblage à la température précitée et donc retour à la température ambiante de 23°C, l'assemblage est disposé sur un étau. On percute alors l'assemblage avec une masse de 1.5kg lâchée d'une hauteur de 1 mètre. Le nombre de lâchés jusqu'à la rupture de l'assemblage est défini comme étant l'impact post cuisson.

Les termes « monomère de type acrylique » désignent, au sens de la présente invention, tout ester de l'acide acrylique, renfermant une double liaison carbone-carbone et susceptible de polymériser.

Les termes « monomères de type méthacrylique » désignent tout ester de l'acide méthacrylique. Il peut s'agir, en particulier du méthacrylate de méthyle.

### EXEMPLES

Les copolymères à blocs utilisés sont des copolymères à blocs PMMA bloc-PABU bloc-PMMA (poly méthacrylate de méthyle bloc- poly acrylate de butyle bloc- poly méthacrylate de méthyle).
Les particules solides sont des particules comprenant un noyau en polybutadiène et une enveloppe en PMMA. Elles forment une poudre de particules ayant un diamètre moyen mesuré de 250 µm (D50, mesurée par diffusion dynamique de la lumière au moyen d'un appareil ZetaSizer®). La taille unitaire de la particule est de 170 nm (mesurée par diffusion dynamique de la lumière au moyen d'un appareil ZetaSizer®).

### Exemples de compositions

**Tableau I**

| Composant | Composition A % en masse | Composition B | Composition C |
|---|---|---|---|
| Copolymère à blocs | 9 | 0 | 12 |
| Particules solides noyau-enveloppe | 0 | 19 | 19 |
| Mélanges de monomères de type méthacrylates | 41 | 41 | 41 |
| Additifs | 5 | 5 | 5 |

Le Tableau I regroupe trois exemples de composition. La composition A ne contient que le copolymère à bloc précité. La composition B ne contient que les particules solides. La composition C qui correspond à une composition selon l'invention, contient à la fois le copolymère et les particules solides et permet de montrer la synergie entre ces deux éléments.

### Propriétés

L'allongement à la rupture a été mesuré selon la norme ISO 527-1A.

L'indice de thixotropie a été mesuré au moyen d'un appareil de type Brookfield avec mobile Elipath T-D. Les viscosités mesurées en mPa.s pour la détermination de l'indice de thixotropie sont celles à 2 tr/min et 20tr/min.

L'impact à froid et l'impact post cuisson sont mesurés selon les méthodes précitées.

Les résultats obtenus pour les trois compositions du Tableau I sont regroupés dans le Tableau II ci-dessous.

**Tableau II**

| Caractéristique | Composition A | Composition B | Composition C |
|---|---|---|---|
| Indice de thixotropie | 3 | 3,5 | 5 |
| Impact à froid | 1 | 1 | 3 |
| Impact post cuisson | 1 | 1 | 3 |
| Allongement | 60% | 160% | 180% |

Au vu des résultats du Tableau II, on constate que la présence des particules solides permet d'augmenter considérablement l'indice de thixotropie, l'impact à froid, l'impact à chaud et l'allongement à la rupture. On constate donc qu'il existe une synergie entre les particules solides et les copolymères à blocs.

## Revendications

1. Composition d'additif utilisable notamment dans un adhésif structural **caractérisée en ce qu'**elle comprend :
- au moins un copolymère à blocs sans styrène formé d'au moins deux blocs et en particulier d'au moins trois blocs ;
- et une pluralité de particules du type noyau-enveloppe comprenant un premier polymère de type élastomère qui présente une température de transition vitreuse mesurée par analyse thermique différentielle égale ou inférieure à 0°C et notamment égale ou inférieure à -40°C, l'enveloppe desdites particules comprenant un deuxième polymère dont la température de transition vitreuse est égale ou supérieure à 30°C.

2. Composition selon la revendication 1, **caractérisée en ce que** ledit copolymère à blocs comporte au moins un bloc A choisi parmi :
- le poly méthacrylate de méthyle (PMMA) ;
- le PMMA dont au moins une partie des groupements CH₃ et/ou OCH₃ du bloc PMMA sont substitués par un atome ou un groupement fonctionnel choisi parmi un atome H, un groupe carboxyle, NH₂, 1,2 époxy propyl (CH₂COCH₂) ;
- les copolymères de PMMA obtenus par copolymérisation de méthacrylate de méthyle avec au moins un monomère choisi parmi l'acide acrylique, les dérivés alkylés de l'acide acrylique, notamment, l'acide méthacrylique, l'éthyle acrylate, le butyle acrylate, le 2-éthyl acrylate d'héxyle, l'hydroxy éthyle acrylate, le 2-éthyle méthacrylate d'héxyle, les amides de l'acide acrylique, les amides de l'acide méthacrylique, notamment la di méthyl acrylamide, le 2-méthoxy acrylate d'éthyl, le 2-métoxy méthacrylate d'éthyl, les acrylates de 2-amino éthyl, les méthacrylates de 2-amino éthyl, les amines quaternaires du 2-méthoxy acrylate d'éthyl, du 2-métoxy méthacrylate d'éthyl, des acrylates de 2-amino éthyl et des méthacrylates de 2-amino éthyl, les acrylates de polyéthylène glycol, les méthacrylates de polyéthylène glycol, les monomères solubles dans l'eau, les monomères comprenant un groupement vinyl et solubles dans l'eau, notamment la N-vinyl pyrrolidone.

3. Composition selon la revendication 1 ou 2, **caractérisée en ce que** ledit copolymère à blocs comporte au moins un bloc B d'un polymère qui présente une température de transition vitreuse Tg égale ou inférieure à 0°C et notamment égale ou inférieure à -40°C.

4. Composition d'additif selon l'une quelconque des revendications précédentes, **caractérisée en ce que** ledit copolymère à blocs comporte un bloc B qui est choisi parmi :
- le poly acrylate de butyle (PBA) ;
- le PBA dont au moins une partie des groupements CH₃ et/ou OCH₃ du bloc PBA sont substitués par un atome ou un groupement fonctionnel choisi parmi un atome H, un groupe carboxyle, NH₂, 1,2 époxy propyl (CH₂COCH₂) ;
- les copolymères de PBA obtenu par copolymérisation d'acrylate de butyle avec au moins un monomère choisi parmi l'acide acrylique, les dérivés alkylés de l'acide acrylique, notamment, l'acide méthacrylique, l'éthyle acrylate, le butyle acrylate, le 2-éthyl acrylate d'héxyle, l'hydroxy éthyle acrylate, le 2-éthyle méthacrylate d'héxyle, les amides de l'acide acrylique, les amides de l'acide méthacrylique, notamment la di méthyl acrylamide, le 2-méthoxy acrylate d'éthyl, le 2-métoxy méthacrylate d'éthyl, les acrylates de 2-amino éthyl, les méthacrylates de 2-amino éthyl, les amines quaternaires du 2-méthoxy acrylate d'éthyl, du 2-métoxy méthacrylate d'éthyl, des acrylates de 2-amino éthyl et des méthacrylates de 2-amino éthyl, les acrylates de polyéthylène glycol, les méthacrylates de polyéthylène glycol, les monomères solubles dans l'eau, les monomères comprenant un groupement vinyl et solubles dans l'eau, notamment la N-vinyl pyrrolidone.

5. Composition selon l'une quelconque des revendications précédentes, **caractérisée en ce que** ledit copolymère à blocs comprend au moins un bloc A et un bloc B, **en ce que** ledit bloc A est choisi parmi
- le PMMA ;
- le PMMA dont au moins une partie des groupements CH₃ et/ou OCH₃ du bloc PMMA sont substitués par un atome ou un groupement fonctionnel choisi parmi un atome H, un groupe carboxyle, NH₂, 1,2 époxy propyl (CH₂COCH₂) ;
- les copolymères de PMMA obtenus par copolymérisation de méthacrylate de méthyle avec au moins un monomère choisi parmi l'acide acrylique, les dérivés alkylés de l'acide acrylique, notamment, l'acide méthacrylique, l'éthyle acrylate, le butyle acrylate, le 2-éthyl acrylate d'héxyle, l'hydroxy éthyle acrylate, le 2-éthyle méthacrylate d'héxyle, les amides de l'acide acrylique, les amides de l'acide méthacrylique, notamment la di méthyl acrylamide, le 2-méthoxy acrylate d'éthyl, le 2-métoxy méthacrylate d'éthyl, les acrylates de 2-amino éthyl, les méthacrylates de 2-amino éthyl, les amines quaternaires du 2-méthoxy acrylate d'éthyl, du 2-métoxy méthacrylate d'éthyl, des acrylates de 2-amino éthyl et des méthacrylates de 2-amino éthyl, les acrylates de polyéthylène glycol, les méthacrylates de polyéthylène glycol, les monomères solubles dans l'eau, les monomères comprenant un groupement vinyl et solubles dans l'eau, notamment la N-vinyl pyrrolidone. ;
et **en ce que** ledit bloc B est choisi parmi :
- le PBA ;
- le PBA dont au moins une partie des groupements CH₃ et/ou OCH₃ du bloc PBA sont substitués par un atome ou un groupement fonctionnel choisi parmi un atome H, un groupe carboxyle, NH₂, 1,2 époxy propyl (CH₂COCH₂) ;
- les copolymères de PBA obtenus par copolymérisation d'acrylate de butyle avec au moins un monomère choisi parmi l'acide acrylique, les dérivés alkylés de l'acide acrylique, notamment, l'acide méthacrylique, l'éthyle acrylate, le butyle acrylate, le 2-éthyl acrylate d'héxyle, l'hydroxy éthyle acrylate, le 2-éthyle méthacrylate d'héxyle, les amides de l'acide acrylique, les amides de l'acide méthacrylique, notamment la di méthyl acrylamide, le 2-méthoxy acrylate d'éthyl, le 2-métoxy méthacrylate d'éthyl, les acrylates de 2-amino éthyl, les méthacrylates de 2-amino éthyl, les amines quaternaires du 2-méthoxy acrylate d'éthyl, du 2-métoxy méthacrylate d'éthyl, des acrylates de 2-amino éthyl, des méthacrylates de 2-amino éthyl, les acrylates de polyéthylène glycol, les méthacrylates de polyéthylène glycol, les monomères solubles dans l'eau, les monomères comprenant un groupement vinyl et solubles dans l'eau, notamment la N-vinyl pyrrolidone.

6. Composition selon l'une quelconque des revendications précédentes, **caractérisée en ce que** ledit copolymère à blocs est un copolymère poly méthacrylate de méthyle bloc- poly acrylate de butyle bloc- poly méthacrylate de méthyle.

7. Composition selon l'une quelconque des revendications précédentes, **caractérisée en ce que** ledit premier polymère est choisi parmi les polymères acryliques, le polybutadiène, notamment réticulé, les copolymères de styrène et butadiène, le polyacrylate de butyle, les polysiloxanes, en particulier le poly(diméthylsiloxane) et les mélanges d'au moins deux de ces polymères/copolymères.

8. Composition selon l'une quelconque des revendications précédentes, **caractérisée en ce que** ledit premier polymère est contenu notamment dans ledit coeur.

9. Composition selon l'une quelconque des revendications précédentes, **caractérisée en ce que** ledit deuxième polymère présente une température de transition vitreuse Tg supérieure à 30°C et égale ou inférieure à 150°C, en particulier, supérieure à 60°C et plus particulièrement supérieure à 80°C, avantageusement supérieure à 90°C et plus avantageusement supérieure à 100°C.

10. Composition selon l'une quelconque des revendications précédentes, **caractérisée en ce que** ledit deuxième polymère comporte des doubles liaisons et/ou des motifs vinyle.

11. Composition selon la revendication 10, **caractérisée en ce que** ledit deuxième polymère est choisi parmi les copolymères acryliques et les copolymères méthacryliques et notamment parmi les copolymères acryliques contenant au moins 70% en poids de monomères choisis parmi les acrylates de C1-C12-alkyle, les copolymères méthacryliques contenant au moins 70% en poids de monomères choisis parmi les méthacrylates de C1-C12-alkyle, en particulier parmi les copolymères acryliques ou méthacrylique comprenant, respectivement, au moins 80% en poids de monomères de type acrylate de C1-C4-alkyle ou 80% en poids de monomères de type méthacrylate de C1-C8-alkyle.

12. Composition selon la revendication 11, **caractérisée en ce que** ledit deuxième polymère comprend au moins 50% en poids d'unités monomères provenant du méthacrylate de méthyle.

13. Composition selon l'une quelconque des revendications précédentes, **caractérisée en ce que** les particules solides comportent un noyau contenant du polybutadiène et une enveloppe contenant du PMMA.

14. Kit d'adhésif structural comprenant une première composition contenant :
- au moins un monomère de type acrylique ou méthacrylique ;
- une composition d'additif selon l'une quelconque des revendications 1 à 13;
- éventuellement des additifs rhéologiques physiques et/ou chimiques ;
- éventuellement au moins un additif d'adhérence ;
- au moins une amine choisie parmi les amines aliphatiques, hétérocycliques et aromatiques et notamment parmi les amines secondaires et tertiaire.

15. Kit selon la revendication 14, **caractérisée en ce qu'**il comprend, en outre, une deuxième composition apte à polymériser ledit monomère lorsqu'elle est mélangée à ladite première composition et **en ce que** ladite deuxième composition comprend des composés radicalaires notamment des peroxydes et/ou des composés du type azonitrile.

16. Kit selon l'une des revendications 14 et 15, **caractérisé en ce que** ladite première composition contient :
- une quantité dudit monomère égale ou supérieure à 5% en masse et égale ou inférieure à 60% en masse de ladite première composition, notamment une quantité de méthacrylate égale ou supérieure à 15% en masse et égale ou inférieure à 60% en masse de ladite première composition ;
- une quantité dudit additif égale ou supérieure à 5% en masse et égale ou inférieure à 87,5 % en masse de ladite première composition ;
- une quantité d'additif(s) rhéologique(s) égale ou supérieure à 0% en masse et égale ou inférieure à 5 % en masse de ladite première composition ;
- une quantité d'additif(s) d'adhérence égale ou supérieure à 1 % en masse et égale ou inférieure à 10 % en masse de ladite première composition, notamment égale à 5% ;
- une quantité d'amine(s) égale ou supérieure à 0,5% en masse et égale ou inférieure à 5 % en masse de ladite première composition.

## Patentansprüche

1. Additivzusammensetzung, die insbesondere in einem strukturellen Klebstoff eingesetzt werden kann, **dadurch gekennzeichnet, dass** sie Folgendes umfasst:
- mindestens ein styrolfreies Block-Copolymer, das mindestens zwei Blöcke und insbesondere mindestens drei Blöcke aufweist;
- und eine Vielzahl von Teilchen vom Kern-Hülle-Typ, bestehend aus einem ersten Polymer vom Elastomer-Typ, das eine mittels differentieller thermischer Analyse (DTA) gemessene Glasübergangstemperatur von kleiner oder gleich -40 °C aufweist, wobei die Hülle dieser Teilchen aus einem zweiten Polymer besteht, dessen Glasübergangstemperatur größer oder gleich 30 °C ist.

2. Zusammensetzung nach Anspruch 1, **dadurch gekennzeichnet, dass** dieses Block-Copolymer mindestens einen Block A aufweist, der ausgewählt ist aus:
- Polymethylmethacrylat (PMMA);
- PMMA, bei dem mindestens ein Teil der CH₃- und/oder OCH₃-Gruppen des PMMA-Blocks durch ein Atom oder eine funktionelle Gruppe ersetzt ist, die ausgewählt sind aus einem H-Atom, einer Carboxylgruppe, NH₂, 1,2-Epoxypropy (CH₂COCH₂);
- PMMA-Copolymeren, durch Copolymerisation von Methylmethacrylat hergestellt, mit mindestens einem Monomer ausgewählt aus Acrylsäure, Alkylderivaten der Acrylsäure, insbesondere Methacrylsäure, Ethylacrylat, Butylacrylat, 2-Ethylhexylacrylat, Hydroxyethylacrylat, 2-Ethylhexylmethacrylat, Acrylsäureamiden, Methacrylsäureamiden, insbesondere Dimethylacrylamid, 2-Methoxyethylacrylat, 2-Methoxyethylmethacrylat, 2-Aminoethylacrylaten, 2-Aminoethylmethacrylaten, quaternären Aminen von 2-Methoxyethylacrylat, von 2-Methoxyethylmethacrylat, von 2-Aminoethylacrylaten und von 2-Aminoethylmethacrylaten, Polyethylenglycolacrylaten, Polyethylenglycolmethacrylaten, wasserlöslichen Monomeren, wasserlöslichen Monomeren mit einer Vinylgruppe, insbesondere N-Vinylpyrrolidon.

3. Zusammensetzung nach Anspruch 1 oder 2, **dadurch gekennzeichnet, dass** dieses Block-Copolymer mindestens einen Block B eines Polymers aufweist, das eine Glasübergangstemperatur Tg von kleiner oder gleich 0 °C und insbesondere kleiner oder gleich -40 °C aufweist.

4. Additiv-Zusammensetzung nach einem beliebigen der vorstehenden Ansprüche, **dadurch gekennzeichnet, dass** dieses Block-Copolymer einen Block B aufweist, der ausgewählt ist aus:
- Polybutylacrylat (PBA);
- PBA, bei dem mindestens ein Teil der CH₃- und/oder OCH₃-Gruppen des PBA-Blocks durch ein Atom oder eine funktionelle Gruppe ersetzt ist, die ausgewählt sind aus einem H-Atom, einer Carboxylgruppe, NH₂, 1,2-Epoxypropyl (CH₂COCH₂);
- PBA-Copolymeren, durch Copolymerisation von Butylacrylat hergestellt, mit mindestens einem Monomer ausgewählt aus Acrylsäure, Alkylderivaten der Acrylsäure, insbesondere Methacrylsäure, Ethylacrylat, Butylacrylat, 2-Ethylhexylacrylat, Hydroxyethylacrylat, 2-Ethylhexylmethacrylat, Acrylsäureamiden, Methacrylsäureamiden, insbesondere Dimethylacrylamiden, 2-Methoxyethylacrylat, 2-Methoxyethylmethacrylat, 2-Aminoethylacrylaten, 2-Aminoethylmethacrylaten, quaternären Aminen von 2-Methoxyethylacrylat, von 2-Methoxyethylmethacrylat, von 2-Aminoethylacrylaten und von 2-Aminoethylmethacrylaten, Polyethylenglycolacrylaten, Polyethylenglycolmethacrylaten, wasserlöslichen Monomeren, wasserlöslichen Monomeren mit einer Vinylgruppe, insbesondere N-Vinylpyrrolidon.

5. Zusammensetzung nach einem beliebigen der vorstehenden Ansprüche, **dadurch gekennzeichnet, dass** dieses Block-Copolymer mindestens einen Block A und einen Block B aufweist, wobei der Block A ausgewählt ist aus :
- PMMA;
- PMMA, bei dem mindestens ein Teil der CH₃- und/oder OCH₃-Gruppen des PMMA-Blocks durch ein Atom oder eine funktionelle Gruppe ersetzt ist, die ausgewählt sind aus einem H-Atom, einer Carboxylgruppe, NH₂, 1,2-Epoxypropyl (CH₂COCH₂);
- PMMA-Copolymeren, durch Copolymerisation von Methylmethacrylat hergestellt, mit mindestens einem Monomer ausgewählt aus Acrylsäure, Alkylderivaten der Acrylsäure, insbesondere Methacrylsäure, Ethylacrylat, Butylacrylat, 2-Ethylhexylacrylat, Hydroxyethylacrylat, 2-Ethylhexylmethacrylat, Acrylsäureamiden, Methacrylsäureamiden, insbesondere Dimethylacrylamiden, 2-Methoxyethylacrylat, 2-Methoxyethylmethacrylat, 2-Aminoethylacrylaten, 2-Aminoethylmethacrylaten, quaternären Aminen von 2-Methoxyethylacrylat, von 2-Methoxyethylmethacrylat, von 2-Aminoethylacrylaten und von 2-Aminoethylmethacrylaten, Polyethylenglycolacrylaten, Polyethylenglycolmethacrylaten, wasserlöslichen Monomeren, wasserlöslichen Monomeren mit einer Vinylgruppe, insbesondere N-Vinylpyrrolidon;
und wobei der Block B ausgewählt ist aus:
- PBA;
- PBA, bei dem mindestens ein Teil der CH₃- und/oder OCH₃-Gruppen des PBA-Blocks durch ein Atom oder eine funktionelle Gruppe ersetzt ist, die ausgewählt sind aus einem H-Atom, einer Carboxylgruppe, NH₂, 1,2-Epoxypropyl (CH₂COCH₂);
- PBA-Copolymeren, durch Copolymerisation von Butylacrylat hergestellt, mit mindestens einem Monomer ausgewählt aus Acrylsäure, Alkylderivaten der Acrylsäure, insbesondere Methacrylsäure, Ethylacrylat, Butylacrylat, 2-Ethylhexylacrylat, Hydroxyethylacrylat, 2-Ethylhexylmethacrylat, Acrylsäureamiden, Methacrylsäureamiden, insbesondere Dimethylacrylamiden, 2-Methoxyethylacrylat, 2-Methoxyethylmethacrylat, 2-Aminoethylacrylaten, 2-Aminoethylmethacrylaten, quaternären Aminen von 2-Methoxyethylacrylat, von 2-Methoxyethylmethacrylat, von 2-Aminoethylacrylaten und von 2-Aminoethylmethacrylaten, Polyethylenglycolacrylaten, Polyethylenglycolmethacrylaten, wasserlöslichen Monomeren, wasserlöslichen Monomeren mit einer Vinylgruppe, insbesondere N-Vinylpyrrolidon.

6. Zusammensetzung nach einem beliebigen der vorstehenden Ansprüche, **dadurch gekennzeichnet, dass** dieses Block-Copolymer ein Polymethylmethacrylatblock-Polybutylacrylatblock-Polymethylmethacrylatblock-Copolymer ist.

7. Zusammensetzung nach einem beliebigen der vorstehenden Ansprüche, **dadurch gekennzeichnet, dass** dieses erste Polymer ausgewählt ist aus Acrylpolymeren, insbesondere vernetztem, Polybutadien, Styrol- und Butadien-Copolymeren, Polybutylacrylat, Polysiloxanen, insbesondere Poly(dimethylsiloxan), und Mischungen von mindestens zwei dieser Polymere/Copolymere.

8. Zusammensetzung nach einem beliebigen der vorstehenden Ansprüche, **dadurch gekennzeichnet, dass** dieses erste Polymer in diesem Kernstück enthalten ist.

9. Zusammensetzung nach einem beliebigen der vorstehenden Ansprüche, **dadurch gekennzeichnet, dass** dieses zweite Polymer eine Glasübergangstemperatur Tg von über 30 °C und kleiner oder gleich 150°C, insbesondere von über 60 °C und vor allem von über 80 °C, vorzugsweise von über 90 °C und noch stärker bevorzugt von über 100 °C, aufweist.

10. Zusammensetzung nach einem beliebigen der vorstehenden Ansprüche, **dadurch gekennzeichnet, dass** dieses zweite Polymer Vinyl-Doppelbindungen und/oder -einheiten aufweist.

11. Zusammensetzung nach Anspruch 10, **dadurch gekennzeichnet, dass** dieses zweite Polymer ausgewählt ist aus Acrylcopolymeren und Methacrylcopolymeren und insbesondere Acrylcopolymeren mit mindestens 70 Gew.-% Monomeren ausgewählt aus C1- bis C12-Alkylacrylaten, wobei die Methacrylcopolymere mindestens 70 Gew.-% Monomere besitzen, die ausgewählt sind aus C1- bis C12-Alkylmethacrylaten, insbesondere aus Acryl- oder Methacrylcopolymeren mit jeweils mindestens 80 Gew.-% Monomeren vom Typ C1- bis C4-Alkylacrylat oder 80 Gew.-% Monomeren vom Typ C1- bis C8-Alkylmethacrylat.

12. Zusammensetzung nach Anspruch 11, **dadurch gekennzeichnet, dass** dieses zweite Polymer mindestens 50*Gew*.-*%* Monomer-Einheiten aus Methylmethacrylat umfasst.

13. Zusammensetzung aus einem beliebigen der vorstehenden Ansprüche, **dadurch gekennzeichnet, dass** die Feststoffteilchen einen Kern aus Polybutadien und eine Hülle aus PMMA besitzen.

14. Strukturelles Klebstoff-Kit bestehend aus einer ersten Zusammensetzung mit:
- mindestens einem Acryl- oder Methacryl-Monomer;
- einer Additiv-Zusammensetzung nach einem beliebigen der vorstehenden Ansprüche 1 bis 13;
- eventuell physikalischen und/oder chemischen rheologischen Additiven;
- eventuell mindestens einem Haftadditiv;
- mindestens einem Amin, ausgewählt aus den aliphatischen, heterozyklischen und aromatischen Aminen, und insbesondere aus den sekundären und tertiären Aminen.

15. Kit gemäß Anspruch 14, **dadurch gekennzeichnet, dass** es zudem eine zweite Zusammensetzung aufweist, die das Polymerisieren dieses Monomers auslösen kann, wenn sie mit dieser ersten Zusammensetzung vermengt wird, und **dadurch gekennzeichnet, dass** diese zweite Zusammensetzung radikalische Verbindungen, insbesondere Peroxyde und/oder Azonitril-Verbindungen, aufweist.

16. Kit nach einem der vorstehenden Ansprüche 14 und 15, **dadurch gekennzeichnet, dass** diese erste Zusammensetzung Folgendes umfasst:
- eine Menge dieses Monomers von größer oder gleich 5 Gew.-% und kleiner oder gleich 60 Gew.-% dieser ersten Zusammensetzung, insbesondere eine Menge an Methacrylat von größer oder gleich 15 Gew.-% und kleiner oder gleich 60 Gew.-% dieser ersten Zusammensetzung;
- eine Menge dieses Additivs von größer oder gleich 5 Gew.-% und kleiner oder gleich 87,5 Gew.-% dieser ersten Zusammensetzung;
- eine Menge von rheologischem(n) Additiv(en) von größer oder gleich 0 Gew.-% und kleiner oder gleich 5 Gew.-% dieser ersten Zusammensetzung;
- eine Menge von Haftadditiv(en) von größer oder gleich 1 Gew.-% und kleiner oder gleich 10 Gew.-% dieser ersten Zusammensetzung, insbesondere gleich 5 Gew.-%;
- eine Menge von Amin(en) von größer oder gleich 0,5 Gew.-% und kleiner oder gleich 5 Gew.-% dieser ersten Zusammensetzung.

## Claims

1. An additive composition usable in particular in a structural adhesive, **characterized in that** it comprises:
- at least one styrene-free block copolymer formed of at least two blocks and in particular of at least three blocks;
- and a plurality of particles of the core/shell type comprising a first polymer of elastomer type which exhibits a glass transition temperature equal to or less than 0°C measured by dynamical scanning calorimetry and in particular equal to or less than -40°C, the shell of said particles comprising a second polymer, the glass transition temperature of which is equal to or greater than 30°C.

2. The composition as claimed in claim 1, **characterized in that** said block copolymer comprises at least one block A chosen from:
- polymethyl methacrylate (PMMA);
- PMMA, at least a portion of the CH₃ and/or OCH₃ groups of the PMMA block of which are replaced by a functional atom or group chosen from a H atom or a carboxyl, NH₂ or 1,2-epoxypropyl (CH₂CHOCH₂) group;
- PMMA copolymers obtained by copolymerization of methyl methacrylate with at least one monomer chosen from acrylic acid, alkylated derivatives of acrylic acid, in particular methacrylic acid, ethyl acrylate, butyl acrylate, hexyl 2-ethylacrylate, hydroxyethyl acrylate, hexyl 2-ethylmethacrylate, amides of acrylic acid, amides of methacrylic acid, in particular dimethylacrylamide, ethyl 2-methoxyacrylate, ethyl 2-methoxymethacrylate, 2-aminoethyl acrylates, 2-aminoethyl methacrylates, quaternary amines of ethyl 2-methoxyacrylate, of ethyl 2-methoxymethacrylate, 2-aminoethyl acrylates and 2-aminoethyl methacrylates, polyethylene glycol acrylates, polyethylene glycol methacrylates, water-soluble monomers, water-soluble monomers comprising a vinyl group, in particular N-vinylpyrrolidone.

3. The composition as claimed in claim 1 or 2, **characterized in that** said block copolymer comprises at least one block B of a polymer which exhibits a glass transition temperature Tg equal to or less than 0°C and in particular equal to or less than -40°C.

4. The additive composition as claimed in any one of the preceding claims, **characterized in that** said block copolymer comprises a block B which is chosen from:
- polybutyl acrylate (PBA);
- PBA, at least a portion of the CH₃ and/or OCH₃ groups of the PBA block of which are replaced by a functional atom or group chosen from a H atom or a carboxyl, NH₂ or 1,2-epoxypropyl (CH₂CHOCH₂) group;
- PBA copolymers obtained by copolymerization of butyl acrylate with at least one monomer chosen from acrylic acid, alkylated derivatives of acrylic acid, in particular methacrylic acid, ethyl acrylate, butyl acrylate, hexyl 2-ethylacrylate, hydroxyethyl acrylate, hexyl 2-ethylmethacrylate, amides of acrylic acid, amides of methacrylic acid, in particular dimethylacrylamide, ethyl 2-methoxyacrylate, ethyl 2-methoxymethacrylate, 2-aminoethyl acrylates, 2-aminoethyl methacrylates, quaternary amines of ethyl 2-methoxyacrylate, of ethyl 2-methoxymethacrylate, 2-aminoethyl acrylates and 2-aminoethyl methacrylates, polyethylene glycol acrylates, polyethylene glycol methacrylates, water-soluble monomers, water-soluble monomers comprising a vinyl group, in particular N-vinylpyrrolidone.

5. The composition as claimed in any one of the preceding claims, **characterized in that** said block copolymer comprises at least one block A and one block B, **in that** said block A is chosen from:
- PMMA;
- PMMA, at least a portion of the CH₃ and/or OCH₃ groups of the PMMA block of which are replaced by a functional atom or group chosen from a H atom or a carboxyl, NH₂ or 1,2-epoxypropyl (CH₂CHOCH₂) group;
- PMMA copolymers obtained by copolymerization of methyl methacrylate with at least one monomer chosen from acrylic acid, alkylated derivatives of acrylic acid, in particular methacrylic acid, ethyl acrylate, butyl acrylate, hexyl 2-ethylacrylate, hydroxyethyl acrylate, hexyl 2-ethylmethacrylate, amides of acrylic acid, amides of methacrylic acid, in particular dimethylacrylamide, ethyl 2-methoxyacrylate, ethyl 2-methoxymethacrylate, 2-aminoethyl acrylates, 2-aminoethyl methacrylates, quaternary amines of ethyl 2-methoxyacrylate, of ethyl 2-methoxymethacrylate, 2-aminoethyl acrylates and 2-aminoethyl methacrylates, polyethylene glycol acrylates, polyethylene glycol methacrylates, water-soluble monomers, water-soluble monomers comprising a vinyl group, in particular N-vinylpyrrolidone;
and **in that** said block B is chosen from:
- PBA;
- PBA, at least a portion of the CH₃ and/or OCH₃ groups of the PBA block of which are replaced by a functional atom or group chosen from a H atom or a carboxyl, NH₂ or 1,2-epoxypropyl (CH₂CHOCH₂) group;
- PBA copolymers obtained by copolymerization of butyl acrylate with at least one monomer chosen from acrylic acid, alkylated derivatives of acrylic acid, in particular methacrylic acid, ethyl acrylate, butyl acrylate, hexyl 2-ethylacrylate, hydroxyethyl acrylate, hexyl 2-ethylmethacrylate, amides of acrylic acid, amides of methacrylic acid, in particular dimethylacrylamide, ethyl 2-methoxyacrylate, ethyl 2-methoxymethacrylate, 2-aminoethyl acrylates, 2-aminoethyl methacrylates, quaternary amines of ethyl 2-methoxyacrylate, of ethyl 2-methoxymethacrylate, 2-aminoethyl acrylates, 2-aminoethyl methacrylates, polyethylene glycol acrylates, polyethylene glycol methacrylates, water-soluble monomers, water-soluble monomers comprising a vinyl group, in particular N-vinylpyrrolidone.

6. The composition as claimed in any one of the preceding claims, **characterized in that** said block copolymer is a polymethyl methacrylate-*block-*polybutyl acrylate-*block*-polymethyl methacrylate copolymer.

7. The composition as claimed in any one of the preceding claims, **characterized in that** said first polymer is chosen from acrylic polymers, polybutadiene, in particular crosslinked polybutadiene, styrene and butadiene copolymers, polybutyl acrylate, polysiloxanes, in particular poly(dimethylsiloxane), and mixtures of at least two of these polymers/copolymers.

8. The composition as claimed in any one of the preceding claims, **characterized in that** said first polymer is present in said core.

9. The composition as claimed in any one of the preceding claims, **characterized in that** said second polymer exhibits a glass transition temperature Tg which is greater than 30°C and equal to or less than 150°C, in particular greater than 60°C and more particularly greater than 80°C, advantageously greater than 90°C and more advantageously greater than 100°C.

10. The composition as claimed in any one of the preceding claims, **characterized in that** said second polymer comprises double bonds and/or vinyl units.

11. The composition as claimed in claim 10, **characterized in that** said second polymer is chosen from acrylic copolymers and methacrylic copolymers and in particular from acrylic copolymers containing at least 70% by weight of monomers chosen from C₁-C₁₂-alkyl acrylates, methacrylic copolymers containing at least 70% by weight of monomers chosen from C₁-C₁₂-alkyl methacrylates, in particular from acrylic or methacrylate copolymers respectively comprising at least 80% by weight of monomers of C₁-C₄-alkyl acrylate type or 80% by weight of monomers of C₁-C₈-alkyl methacrylate type.

12. The composition as claimed in claim 11, **characterized in that** said second polymer comprises at least 50% by weight of monomer units originating from methyl methacrylate.

13. The composition as claimed in any one of the preceding claims, **characterized in that** the solid particles comprise a core containing polybutadiene and a shell containing PMMA.

14. A structural adhesive kit comprising a first composition containing:
- at least one monomer of acrylic or methacrylic type;
- an additive composition as claimed in anyone of claims 1 to 13;
- optionally physical and/or chemical rheological additives;
- optionally at least one adhesion additive;
- at least one amine chosen from aliphatic, heterocyclic and aromatic amines and in particular from secondary and tertiary amines.

15. The kit as claimed in claim 14, **characterized in that** it additionally comprises a second composition capable of polymerizing said monomer when it is mixed with said first composition and **in that** said second composition comprises radical compounds, in particular peroxides and/or compounds of the azonitrile type.

16. The kit as claimed in either of claims 14 and 15, **characterized in that** said first composition contains:
- an amount of said monomer which is equal to or greater than 5% by weight and equal to or less than 60% by weight of said first composition, in particular an amount of methacrylate which is equal to or greater than 15% by weight and equal to or less than 60% by weight of said first composition;
- an amount of said additive which is equal to or greater than 5% by weight and equal to or less than 87.5% by weight of said first composition;
- an amount of rheological additive(s) which is equal to or greater than 0% by weight and equal to or less than 5% by weight of said first composition;
- an amount of adhesion additive(s) which is equal to or greater than 1% by weight and equal to or less than 10% by weight of said first composition, in particular equal to 5%;
- an amount of amine(s) which is equal to or greater than 0.5% by weight and equal to or less than 5% by weight of said first composition.
